# EUROPEAN PATENT SPECIFICATION

(11) **EP 3 755 158 B1**
(45) Date of publication and mention of the grant of the patent: **27.03.2024**
(21) Application number: 19703373.1
(22) Date of filing: 13.02.2019
(51) Int. Cl.: A23G 1/36

(54) **CHOCOLATE SEEDS AND CHOCOLATE COMPRISING A MILK FAT FRACTION**
SCHOKOLADENSAMEN UND SCHOKOLADE MIT MILCHFETTFRAKTION
GRAINES DE CHOCOLAT ET CHOCOLAT COMPRENANT UNE FRACTION DE MATIÈRE GRASSE DU LAIT

(30) Priority: 19.02.2018 EP 18157316
(43) Date of publication of application: 30.12.2020
(73) Proprietor: FrieslandCampina Nederland B.V., 3818LE Amersfoort (NL)
(72) Inventor: DEPYPERE, Frédéric Roger, 6708 WH Wageningen (NL); BOERBOOM, Franciscus Johannes Gerardus, 6708 WH Wageningen (NL); KLOEK, William, 6708 WH Wageningen (NL); SOMERS, Marco Albertus Franciscus Johannes, 6708 WH Wageningen (NL); GREINER, Maximilian Martin, 6708 WH Wageningen (NL)
(74) Representative: FrieslandCampina IP Department
(86) International application number: PCT/EP2019/053503
(87) International publication number: WO 2019/158560

(56) References cited:
- WO-A1-2013/151424
- WO-A1-2015/088434
- WO-A1-2016/200323
- WO-A1-2016/200327
- SONWAI S ET AL: "Controlling fat bloom formation in chocolate - Impact of milk fat on microstructure and fat phase crystallisation", FOOD CHEMISTRY, ELSEVIER LTD, NL, vol. 119, no. 1, 1 March 2010 (2010-03-01) , pages 286-297, XP026692050, ISSN: 0308-8146, DOI: 10.1016/J.FOODCHEM.2009.06.031 [retrieved on 2009-06-21]
- HARTEL R W: "Applications of milk-fat fractions in confectionery products", JOURNAL OF THE AMERICAN OIL CHEMISTS' SOCIETY (JA, SPRINGER, DE, vol. 73, no. 8, 1 August 1996 (1996-08-01) , pages 945-953, XP008155853, ISSN: 0003-021X, DOI: 10.1007/BF02523401
- LOHMAN M H ET AL: "EFFECT OF MILK FAT FRACTIONS ON FAT BLOOM IN DARK CHOCOLATE", JOURNAL OF THE AMERICAN OIL CHEMISTS' SOCIETY (JAOCS), SPRINGER, DE, vol. 71, no. 3, 1 March 1994 (1994-03-01), pages 267-276, XP000427179, ISSN: 0003-021X, DOI: 10.1007/BF02638052

## Description

The invention relates to the fields of chocolate and chocolate compound. In particular, the invention relates to a method for preparing a chocolate or chocolate compound seed composition and to a chocolate or chocolate compound seed composition. Further the invention relates to a method for preparing chocolate or chocolate compound and to chocolate or chocolate compound obtainable by such method. More in particular, the invention relates to the use of a chocolate or chocolate compound seed composition to reduce detrimental changes to the chocolate or chocolate compound due to heat and subsequent cooling, such as temperature induced fat bloom or structural defects caused by temperature fluctuations.

Bloomed chocolate or chocolate compound is characterized by a loss of the initial gloss of the product's surface. Fat bloom can have different appearances, from a uniform dull grey to a marble aspect, as well as from small individual white points to large white spots on the surface. It can be due to many factors, including improper processing conditions, product composition and temperature effects, e.g. during storage or transport.

WO 2013/151424 addresses the problem of migration bloom. This phenomenon is often experienced in filled chocolates, when a lipid fraction of the filling migrates to the surface of the chocolate (compound). WO 2013/151424 discloses that milk fat fractions having a solid fat content at 25 °C of at least 41.5% by weight provide a chocolate composition with reduced migration of said lipid fraction.

Heat induced fat bloom is a separate phenomenon that occurs in chocolate or chocolate compound when it is exposed to a relatively high temperature (typically above 25 °C for chocolate). Heat induced bloom can *e.g.* occur during storage for a number of days at a temperature above 25 °C, or for a shorter period at a higher temperature. However, a form of heat induced bloom can also occur as a result of uncontrolled recrystallization, due to temperature fluctuations between a relatively low temperature, typically below 25 °C and a relatively high temperature, typically above 25 °C, in particular above 30 °C. It is generally agreed amongst those skilled in the art that formation and growth of fat crystals on the surface of the chocolate plays an important role in the occurrence of heat induced fat blooming. Also the polymorphic transformation from the desirable form V to the undesirable form VI crystalline form of the fat phase in chocolate is thought to play a role. However, it is thought that the exact mechanism of heat induced blooming is dependent on the specifics of the heat exposure, such as the highest and lowest temperature to which the product is exposed, exposure time, number of fluctuations between a relatively high temperature and a relatively low temperature, the rate at which the temperature changes, and the shape of the temperature-time profile.

Besides affecting visual appearance exposing chocolate or chocolate compounds to a plurality of temperature fluctuations (such as between a temperature above about 25 °C and a temperature below about 25 °C) can lead to structural defects on and/or in chocolate or chocolate compound.

It has been proposed to reduce bloom by including milk fat into a chocolate mixture that is subsequently tempered and thereafter solidified to form the chocolate, see Sonwai and Rousseau, Food Chemistry 119 (2010) 286-297 or Lohman and Hartel, JAOCS, Vol 71, no 3 (March 1994), 267-276. Sonwai and Rousseau reported that adding milk fat can have a positive impact on fat bloom on the surface of chocolate, when chocolate was subjected to temperature cycling between 26 and 29 °C. Lohman and Hartel reported that higher-melting milk fat fractions are suitable to inhibit fat bloom, when chocolate was subjected to temperature cycling between 26.7 and 15.7 °C. However, it is desirable that also heat induced blooming is reduced or even avoided when chocolate (or chocolate compound) is exposed to a temperature in excess of 30 °C, or when it is exposed to a relatively large temperature fluctuation. Such exposure can occur, e.g. during transportation or storage in a storage space that is insufficiently temperature-controlled. It is in particular desirable to provide a chocolate or chocolate compound with improved resistance to heat induced bloom when exposed to a temperature of about the melting point of Form V cocoa butter crystals (34 °C) or higher, in particular at least up to about 36 °C, preferably up to about 38 °C, or even higher.

WO 2015/088434 discloses a heat stable chocolate comprising a fat phase, said fat phase comprising (i) cacoa butter, a cacoa butter equivalent or combinations thereof, (iii) a cacoa butter improver, (iii) an emulsifier other than lecithin and (iv) a crystalline seed. This crystalline seed comprises 40-95% by weight of SatOSat-triglycerides (Sat is a saturated fatty acid and O is oleic acid) and 30-85% by weight of StOSt-triglycerides (St is stearic acid). The crystalline seed has an endotherm melt peak position of about 40 °C or higher when measured by Differential Scanning Calorimetry. WO 2015/088434 addresses the problem of detrimental visual effects due to heat induced bloom at such temperature by adding crystalline seeds during stirring to a chocolate composition further comprising cocoa butter improver and an emulsifier other than lecithin. In the Examples the seeds are added to molten chocolate comprising shea stearin (cocoa butter improver) and sorbitan-tri-stearate (emulsifier).

WO 2016/200327 provides an alternative for the seeds of WO 2015/088434. WO 2016/200327 discloses a seed particle product comprising a fat phase which comprises (i) 60.0-99.9% by weight of triglycerides and (ii) 40.0-99.0% by weight of triglycerides having C16-C24 saturated fatty acids in the sn-1 and sn-3 positions of the triglyceride and oleic acid in the sn-2 position of the triglyceride, wherein the seed particle product has two endotherm melt peak positions as measured by Differential Scanning Calorimetry: one below a temperature T_{intermediate} and one above a temperature T_{intermediate}. This temperature T_{intermediate} is at least 39.5 °C. The seeds in the Examples of WO 2016/200327 are also based on shea stearin. It would be desirable though to address the problem of heat induced bloom without needing to use ingredients from sources that are not generally used in chocolate production, in particular without ingredients that are not considered clean-label for chocolate in the EU or USA, such as synthetic ingredients like sorbitan-tri-stearate, or sheastearin. It would further be desirable to provide a method that allows the production of chocolate (compound) with reduced heat induced bloom using conventional equipment.

WO 2016/200323 discloses a heat stable chocolate comprising a fat phase, said fat phase comprising triglycerides, including triglycerides from non-vegetable sources, an emulsifier other than lecithin and a crystalline seed. This crystalline seed comprises 40-99.9% by weight of SatOSat-triglycerides (Sat is a saturated fatty acid and O is oleic acid) and has an endotherm melt peak position of about 40 °C or higher when measured by Differential Scanning Calorimetry.

The present inventors contemplated whether a stearin fraction of milk fat would be suitable to improve resistance to heat induced bloom if it was added as a seed material to a chocolate mixture, without substantially melting the seed material or otherwise rendering it ineffective as a seed material. They realized that the stearin fraction should be added to the chocolate mixture during or after the tempering to maintain crystalline milk fat seeds. However, during internal research the present inventors found that it was not possible on available equipment to achieve satisfactory results. In particular they found that the milk fat fraction could not be satisfactorily dispersed, thus obtaining lumps, into the chocolate mixture at a low enough temperature to avoid substantial loss of the crystalline seeds. Further, they found that adding the milk fat fraction as a melt to the chocolate base did not work well either, in particular because this led to significant problems with tempering the chocolate.

Surprisingly it was then found that a seed composition based on a blend of a specific milk fat fraction and cocoa butter or cocoa butter equivalent was suitable to obtain a chocolate with reduced heat induced blooming, also when the chocolate was exposed to a number of temperature cycles between a temperature above 34 °C and a temperature below 30 °C, *e.g.* 25 °C.

Accordingly, the present invention relates to a method for preparing a chocolate seed composition or chocolate compound seed composition having an endotherm melt peak position of at least 40 °C, as measured by Differential Scanning Calorimetry (DSC), comprising subjecting a liquid fat blend comprising
(i) 50-99.5 wt. % of a stearin fraction of milk fat having an endotherm melt peak position of at least 42.5 °C, as measured by Differential Scanning Calorimetry, and
(ii) 50-0.5 wt. % cocoa butter or cocoa butter equivalent
to a crystallization step, which comprises cooling the liquid fat blend to a temperature below the lower end of the solidification range of the blend. The invention further relates to a chocolate seed composition or chocolate compound seed composition obtained by the method for preparing a chocolate seed composition or chocolate compound seed composition according to the invention, said composition comprising a crystalline fat phase which fat phase is a blend of (i) a stearin fraction of milk fat and (ii) cocoa butter or cocoa butter equivalent in a weight to weight ratio of said stearin fraction to cacao butter (equivalent) in the range of 50:50 to 99:1, preferably in the range of 60:40 to 95:5, more preferably in the range of 65:35 to 75:25, said chocolate seed composition having an endotherm melt peak position of at least 40 °C, when measured by Differential Scanning Calorimetry.

Said endotherm melt peak position of the chocolate seed composition or chocolate compound seed composition and said endotherm melt peak position of the stearin fraction of milk fat are typically the primary melt peak positions (in a thermogram of a sample of said composition respectively stearin fraction as obtainable by DSC). They are preferably also the main melt peak positions (in a thermogram of a sample of said composition respectively stearin fraction as obtainable by DSC). Said endotherm melt peak position of the chocolate seed composition or chocolate compound seed composition is generally in the range of 40-54 °C, preferably in the range of 41-52 °C, more preferably in the range of 42-50 °C, more preferably in the range of 43-48 °C, more preferably 43-46 °C as measured by DSC.

In an advantageous embodiment, a seed composition according to the invention is used to improve thermal tolerance of chocolate or chocolate compound, in particular by reducing heat induced fat bloom on chocolate or chocolate compound.

In an advantageous embodiment, a seed composition according to the invention is used to reduce structural defects induced by temperature fluctuation on or in chocolate or chocolate compound.

The invention further relates to a method for preparing chocolate or chocolate compound, comprising preparing a chocolate mixture or chocolate compound mixture from chocolate mass or chocolate compound mass and tempering the mixture, wherein during or after tempering a seed composition is blended into the chocolate mixture or chocolate compound mixture, after which the resultant blend is cooled and allowed to solidify whereby the chocolate or the chocolate compound is obtained, wherein the seed composition is according to the invention.

Further, the invention relates to chocolate or chocolate compound obtainable by a method for preparing chocolate or chocolate compound according to the invention.

Usually a chocolate or chocolate compound of the invention comprises crystalline fat domains containing a milk fat stearin fraction as a major component of the domains and cocoa butter or cocoa butter equivalent as a minor component, and which domains are embedded in a matrix of chocolate or chocolate compound and which matrix is free of milk fat or contains milk fat as a minor component relative to the content of cocoa butter or cocoa butter equivalent in the matrix.

As illustrated by the Examples and Figures, in accordance with the invention products are obtainable with good resistance to heat induced blooming.
Figure 1 shows how heat induced blooming has occurred in a reference dark chocolate.
Figures 2-4 show dark chocolates according to the invention.
Figure 5 shows how heat induced blooming has occurred in a reference milk chocolate.
Figures 6-8 show milk chocolates according to the invention.
Figure 9 shows an exemplary thermogram of a stearin fraction of milk fat suitable for use in the preparation of a seed composition according to the invention.
Figure 10 shows exemplary thermograms of a seed composition according to the invention.

Further, the present invention is in particular advantageous in that it provides products with good resistance to heat induced blooming without needing any non-cocoa, non-dairy fats, such as without fats coming from other vegetable or animal sources which are not typically present in chocolate and are therefore restricted in use in chocolate applications in various countries.

Unless defined otherwise, all technical and scientific terms used herein have the same meaning as commonly understood by one of ordinary skill in the art.

Differential Scanning Calorimetry (DSC) is a generally known technology to characterize fat-containing products like chocolate and chocolate compound compositions as well as ingredients for such products. In DSC, the difference in the amount of heat required to increase the temperature of a sample and a reference is measured as a function of temperature, which is depicted as so called thermograms. Peaks (positive or negative) in the thermogram typically indicate a temperature (range) at which a phase transition occurs in the sample, such as the melting of (a part of) the sample (an endotherm melt peak position). An endotherm melt peak position of a product is an objective physical property of the product. In case a thermogram has more than one peak, the peak occurring at the highest temperature in the thermogram is called the `primary peak' or `primary peak position', the largest (highest) peak in the thermogram is called the `main peak' or 'main peak position'.

The skilled person will be able to choose a suitable temperature program, sample size and sample preparation based on common general knowledge and the information provided herein.

Unless specified otherwise, the values obtainable from DSC, such as endotherm melt peak positions provided herein are those that are obtainable with a Differential Scanning Calorimeter (DSC) (such as a 823e MettlerToledo) using a sample of 5-25 mg, preferably 15-25 mg, a temperature increment rate of 5 °C/min from a temperature of 4 °C or less to a temperature of 65 °C or more. Endotherm melt peak positions are in particular used herein to characterize: chocolate, chocolate compound, chocolate seed composition, chocolate compound seed composition and milk fat fractions, such as stearin fractions of milk fat. The endotherm melt peak positions are typically as determined by the following method:
Sample size: 15-25 mg
Reference: empty sample holder
Temperature protocol:
   1. 10 min at 4 °C
   2. From 4 to 80 °C with 5 °C/min

The term "or" as used herein means "and/or" unless specified otherwise.

The term "a" or "an" as used herein means "at least one" unless specified otherwise.

The term "substantial(ly)" or "essential(ly)" is generally used herein to indicate that it has the general character or function of that which is specified. When referring to a quantifiable feature, these terms are in particular used to indicate that it is for at least 50 %, more in particular at least 75 %, even more in particular at least 95 %, even more in particular at least 99 %, even more in particular at least 99.5 % of the maximum of that feature.

The term `essentially free' is generally used herein to indicate that a substance is not present (below the detection limit achievable with analytical technology as available on the effective filing date) or present in such a low amount that it does not significantly affect the property of the product that is essentially free of said substance. In practice, in quantitative terms, a product is usually considered essentially free of a substance, if the content of the substance is 0 - 0.5 wt.%, in particular 0 - 0.2 wt.%, more in particular 0 - 0.1 wt.%, based on total weight of the product in which it is present. As will be understood by the skilled person, for certain substances, such as certain aromas or micronutrients, the presence in the starting material may be well below 0.5 wt. %, 0.2 wt. % or 0.1 wt. % and still have a significant effect on a property of the product.

The term "about" in relation to a value generally includes a range around that value as will be understood by the skilled person. In particular, the range is from at least 15 % below to at least 15 % above the value, more in particular from 10 % below to 10 % above the value, more specifically from 5 % below to 5 % above the value.

As used herein, percentages are usually weight percentages unless specified otherwise. Percentages are usually based on total weight, unless specified otherwise.

When referring to a "noun" (*e.g.* a compound, an additive *etc.*) in singular, the plural is meant to be included, unless specified otherwise.

For the purpose of clarity and a concise description features are described herein as part of the same or separate embodiments, however, it will be appreciated that the scope of the invention may include embodiments having combinations of all or some of the features described.

The term `fatty acid' is generally used herein as a genus for free fatty acids and fatty acid residues bound to another organic moiety, in particular as part of an acylglyceride.

The term 'fat' is used herein for triacylglycerides in general (irrespective of the melting point or range) and for lipid compositions substantially consisting of triglycerides in which a minor amount (typically 5 wt. % or less) of one or more other lipid components is present.

Milk fat is the fat phase of milk. Milk fat is a complex mixture of triglycerides and other lipid components. Milk fat typically consists for the largest part of triglycerides (e.g. about 98 %).

In addition to triglycerides, milk fat typically contains several minor components, such as cholesterol, fat-soluble vitamins, free fatty acids, monoglycerides, diglycerides and various other organic components, such as lactones, ketones and aldehydes, contributing to the characteristic flavour or aroma of milk fat. Milk fat (isolated from milk) is commercially available, e.g. in essentially water-free form, which product is generally known as anhydrous milk fat (AMF).

According to the European regulations regarding chocolate, EU directive 2000/36/EC of the European Parliament and of the Council of 23 June 2000 relating to cocoa and chocolate products intended for human consumption, the fat content of the cocoa product comprises 95-100 wt.% cocoa butter and dairy fat. US regulation do not allow other vegetable fat than cocoa butter to be included in chocolate compositions.

Chocolate compound is a non-chocolate product replacement that may include vegetable fat and is often made from a combination of cocoa powder, vegetable fat, and sweeteners. Vegetable fat in compound chocolate may include, coconut oil, palm, palm kernel oil, canola, sunflower, safflower and/or fractions and/or esterifications thereof. It is to be understood that the present invention includes chocolates that are allowed to be labelled chocolate according the national regulations. However also chocolate compounds that are not allowed to be labelled chocolate are expressly comprised in the present invention. Regarding chocolate compounds, the present invention is in particular advantageous to reduce heat-induced bloom in a chocolate compound that has a fat phase capable of crystallizing into more than one crystalline form.

The invention is particularly suitable for providing plain chocolate or plain chocolate compound. Plain chocolate (compound) is typically free of a liquid filling. It can be essentially free of other components than chocolate or chocolate compound or it can contain non-chocolate solid pieces of a food material, e.g. nuts or fruit pieces.

Stearin fractions of milk fat are milk fat fractions with generally a higher melting point, in particular with a higher primary endotherm melt peak position than milk fat. Stearin fraction can be obtained in a manner known per se. E.g. a common process is milk fat fractionation on the basis of melt temperature (dry fractionation, also known as melt crystallisation). This process can be a single-step fractionation or a multi-step fractionation. In each fractionation step a liquid phase (marked as 'O' for 'olein', because this fraction typically is enriched in oleic acid (bound as triglyceride), indicative of long-chain unsaturated fatty acid content) and a solid phase (marked as 'S' for 'stearin' because this fraction typically is enriched in stearic acid (bound as triglyceride), indicative of long-chain saturated fatty acid content). In a multi-step process at least one of the fractions obtained in a previous fractionation step is subjected to at least one further fractionation, resulting in further fluid fraction and a further solid fraction. The obtained fractions can be named on the basis of the subsequent fractions from which the final fat fraction is obtained (see Deffense, E.M.J. (1987), Fat Sci. Technol., 89, 502-507). Thus, SO is the fluid fraction obtained after the dry fractionation of the solid fraction from a first dry fractionation step, whereas SS would be the solid fraction after that second fractionation step. Fractions obtained in a subsequent fractionation from the S-fraction of a first dry fractionation are generally also stearin fractions. Particularly good results have been achieved with a stearin fraction obtained by multi-stage dry fractionation, more in particular with an SS fraction. Other suitable fractionation technologies are generally known, e.g. supercritical fluid fractionation, short path distillation, solvent fractionation.

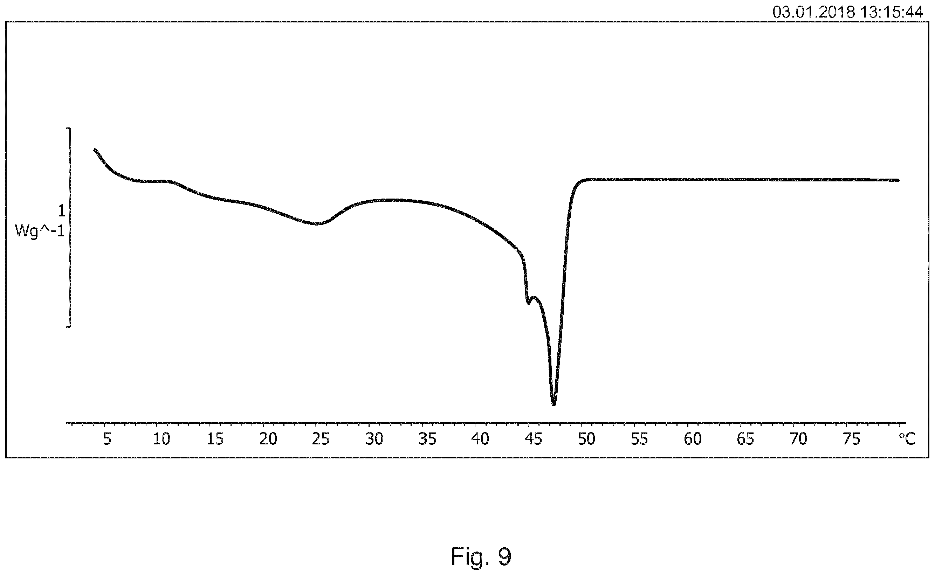

The stearin fraction of milk fat used for the preparation of the seed composition preferably has a primary endotherm melt peak position of said stearin fraction at a temperature in the range of 42.5-49 °C, more preferably in the range of 43.0-48.5 °C, more preferably in the range of 44.0-48.0 °C. In particular, good results have been achieved with a stearin fraction having a primary endotherm melt peak position in the range of 45.0-48.0 °C. Said primary endotherm melt peak position is usually also the main peak position in the thermogram of the stearin fraction. The thermogram of the stearin fraction may be monomodal, or comprise two or more peaks, preferably two or more peaks at a temperature above 40 °C. Figure 9 shows an exemplary thermogram of a preferred stearin fraction of milk fat. In a specific embodiment, two or more peaks are present, wherein the two major peaks (the two highest peaks) are both at a temperature in the range of 42.5-49 °C, in particular in the range of 43.0-48.5 °C, more in particular in the range of 44.0-48.0 °C. One of these is typically the primary peak position in the thermogram.

The stearin fraction of the milk fat preferably has an SFC20 of at least 55%, an SFC25 of at least 50%, an SFC30 of at least 44%, an SFC35 of at least 30 %, an SFC40 of at least 15 % and/or an SFC45 of at least 1.5 %. In a particularly preferred embodiment, the stearin fraction of the milk fat has an SFC20 of at least 55%, an SFC25 of at least 50%, an SFC30 of at least 44%, an SFC35 of at least 30 % and an SFC40 of at least 15 %.

The seed composition is a composition usually essentially consisting of the milk fat fraction and cocoa butter or cocoa butter equivalent. Good results have been obtained with a seed composition that is essentially free of ingredients other than milk components and cocoa components, in particular free of ingredients other than components found in milk fat and components found in cocoa butter. The seed composition is suitable for being used as a seed product for producing chocolate or chocolate compound. Thus, at least part of the seed composition is formed by crystalline particles. The seed composition may essentially consist of crystalline particles, e.g. granules or flakes. Alternatively, the seed composition is a suspension of crystalline particles suspended in a continuous flowable phase. The flowable phase can be a paste or a thick-viscous fluid.

The seed composition usually essentially consists of the stearin fraction of milk fat and cacao butter. The stearin fraction of the milk fat is usually the major component of the seed composition (>50 wt. % of the composition).

The stearin fraction and cocoa butter or cacao butter equivalent are preferably mixed in a weight to weight ratio of at least 60:40, more preferably in a weight to weight ratio of at least 65:35, in particular in a weight to weight ratio of at least 67:33. The stearin fraction and cocoa butter or cacao butter equivalent are usually mixed in a weight to weight ratio of 99:1 or less, preferably of 95:5 or less, more preferably of 85:15 or less, in particular of 75:25 or less.

The stearin fraction and the cocoa butter or cocoa butter equivalent are generally mixed at a temperature at which at least their blend is fluid, preferably at a temperature of at least 5 °C above the upper end of the melting range of the blend, more preferably a temperature at a temperature of at least 10 °C above the upper end of the melting range of the blend. The mixing temperature is usually about 70 °C or less, preferably in the range of 50-65 °C, in particular in the range of 55-65 °C.

After mixing, the blend is cooled to a temperature at which at least part, and suitably a substantial part, of the fat crystallizes to form a crystalline fat phase. The skilled person will be able to determine by visual inspection and based on his experience when the crystallization occurs and what degree of crystallization occurs. This will be evident from the viscosity and colour of the blend. When the viscosity of the blend increases and the colour turns more opaque, crystallization occurs. Furthermore, crystals and degree of crystallization can be quantified, e.g., using X-ray diffraction, DSC or proton NMR spectroscopy. For example, by using proton NMR spectroscopy it can be determined that typically 10-50 wt% of the blend, preferably 15-45 wt% and more preferably 20-40 wt% of the blend solidifies into a crystalline fat phase. Crystallization of the fat in the blend occurs when the temperature is reduced to a value below the lower end of the solidification range of the blend. In a particularly preferred method for preparing the seed composition, the blend is cooled to a temperature in the range of 5-35 °C, preferably 7-30 °C, more preferably 10-25 °C, at which lower temperature crystallization of the fat phase takes place.

In an advantageous method the crystalline fat phase is formed by contacting the liquid blend with a surface (such as a surface of a surface heat exchanger) having a temperature below the lower end of the solidification range of the blend, forming a crystalline fat phase at said surface, removing (such as by scraping) the crystalline fat phase from the surface, thereby forming chocolate or chocolate compound seeds as a particulate material.

In an alternative advantageous method, the crystalline fat phase is directly formed as crystalline fat particles, e.g. as flakes or granules.

In an alternative advantageous method, the crystalline fat particles are formed in situ from the crystalline fat phase wherein the crystalline fat particles are dispersed into a fluid fat phase at a temperature at which at least a substantial part of the crystalline fat particles remain crystalline fat particles, and which fluid fat phase preferably at least substantially consists of cocoa butter or cocoa butter equivalent.

A seed composition according to the invention as prepared by the method described hereinbefore comprises a crystalline fat phase which crystalline fat phase is a blend of (i) a stearin fraction of milk fat and (ii) cocoa butter or cocoa butter equivalent in a weight to weight ratio of said stearin fraction to cacao butter (equivalent) in the range of 50:50 to 99:1, preferably in the range of 60:40 to 95:5, more preferably in the range of 65:35 to 75:25.

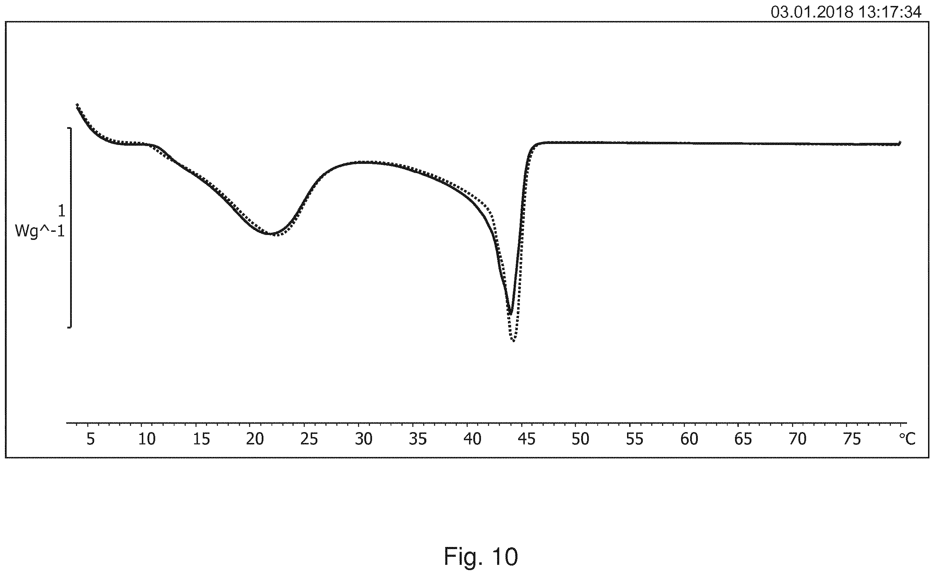

Particularly good results have been achieved with a seed composition according to the invention having a primary endotherm melt peak position in the range of 42-48 °C, more in particular in the range of 43-46 °C. Figure 10 shows an exemplary thermogram of a highly preferred seed composition according to the invention.

A seed composition according to the invention has a SFA-UFA-SFA-triglyceride content (i.e. content of triglycerides having two saturated fatty acid residues at the sn-1 and sn-3 position and one unsaturated fatty acid residue at the sn-2 position of the glycerol backbone) of less than 40 wt. % by weight of the seed composition, wherein SFA stands for saturated fatty acid residue and UFA for unsaturated fatty acid residue.

Compared to, e.g., shea stearin, a stearin fraction of milk fat generally has a higher content of SFA-SFA-SFA-triglyceride and/or a high content of UFA-SFA-SFA-triglyceride and/or SFA-SFA-UFA-triglyceride content. Further, a stearin fraction of milk fat generally comprises triglycerides having a C4:0 fatty acid residue or a C6:0 fatty acid residue. These are generally absent in shea stearin, or present in a trace amount only. Accordingly, the differences in fatty acid composition are usually also noticeable when comparing a seed composition according to the invention to shea stearin based seeds.

The seed composition according to the invention has a total content of SFA-UFA-SFA-triglyceride of less than 40 wt. %, in particular about 35 wt. % or less, based on total weight of the seed composition, wherein SFA stands for saturated fatty acid residue and UFA for unsaturated fatty acid residue as indicated above. The SFA-UFA-SFA-triglyceride, accordingly, contains the unsaturated fatty acid residue at the central (sn-2) position of the glycerol backbone and two saturated fatty acid residues at the sn-1 and sn-3 position, respectively. Saturated fatty acid residues occurring most frequently are the residues of palmitic acid (C16:0) and stearic acid (C18:0), whilst the most commonly occurring unsaturated acid residue is the residue of oleic acid (C18:1).

The total content of C4:0 fatty acid residue plus C6:0 fatty acid residue of the seed composition is generally in the range of 2-5 wt. %, preferably in the range of 3.0-4.5 wt. %, in particular in the range of 3.5-4.0 wt. %.

In general, fatty acid composition of a fat and distribution of the fatty acids over the different positions of the glycerol backbone can be determined by standard method ISO 15884/IDF 182:2002 (Milk fat - Preparation of fatty acid methyl esters) and ISO 15885/IDF 184 (Milk fat - Determination of the fatty acid composition by gas-liquid chromatography).

A chocolate seed composition according to the invention usually has an SFC20 of at least 55%, preferably of 58 - 70 %.

A chocolate seed composition according to the invention usually has an SFC25 of at least 52%, preferably of 54 - 64 %.

A chocolate seed composition according to the invention usually has an SFC30 of at least 43%, preferably of 45 - 56 %.

A chocolate seed composition according to the invention usually has an SFC35 of at least 21 %, preferably of 23 - 39 %.

A chocolate seed composition according to the invention usually has an SFC40 of at least 7%, preferably of 8.5 - 25 %.

In an advantageous embodiment, the seed composition comprises crystalline fat flakes, crystalline fat granules or other crystalline fat particles, which crystalline fat particles are dispersed in a fluid fat phase. In a specific embodiment, the fluid fat phase at least substantially consists of cocoa butter or cocoa butter equivalent.

Milk fat and cocoa butter may contain naturally present emulsifiers, notably mono- and diglycerides. One or more of these are optionally present in a seed composition according to the invention. It is a major advantage of the invention that the seed compositions, in particular the chocolate seed compositions, of the invention do not require additional emulsifiers. Thus, the seed composition is usually essentially free of non-dairy emulsifiers and non-cocoa butter emulsifiers. Accordingly, preferably the seed composition, in particular the chocolate seed composition of the invention is essentially free of emulsifiers other than mono- and diglycerides. The diglyceride content of the seed composition is generally in the range of 0-2 wt.%, in particular in the range of 0.5-1.5 wt.%. The monoglyceride content of the seed composition is generally in the range of 0-1 wt.%, in particular in the range of 0.1-0.3 wt.%. The seed composition is generally essentially free of shea butter stearin. The seed composition is usually essentially free of polysorbates, polyglycerolesters, propylene glycerol esters, sorbitan esters and sugar esters. The seed composition is usually essentially free of lecithin.

As mentioned above, the invention further relates to chocolates and to chocolate compounds. The chocolate or chocolate compounds generally comprise cocoa solids. In a preferred embodiment of the present invention, they comprise at least 2 wt% total dry cocoa solids up to 100%, more preferably in an amount of 15-90%, more preferably in an amount of 20-80% cocoa solids, more preferably in an amount of 25-72%, in particular in an amount of 30-60%, more in particular in an amount of 30-60% cocoa solids, more in particular an amount of 35-55% cocoa solids. Further, usual ingredients may be present in usual amounts, e.g. lecithin, flavours, preferably vanilla, etc.

The chocolate or chocolate compound further usually comprises sugar or other sweetening matter including artificial sweeteners. Usually, the total content of sweetening matter is in the range of 0-80 wt%, preferably 10-70%, more preferably 20-60%, more preferably in an amount of 25-55%, more preferably in an amount of 30-50%.

In addition to the stearin fraction from milk fat, the chocolate or chocolate compound may comprise milk or further milk derived ingredients, such as milk powder, preferably in an amount of 0-40 wt%. The chocolate or chocolate compound may comprise milk protein or another protein.

In a preferred embodiment, the chocolate comprises at least 43 wt% total dry cocoa solids, and preferably at least 26 wt% cocoa butter.

In another preferred embodiment the chocolate comprises at least 30 wt % total dry cocoa solids and preferably comprises at least 18 wt% dry milk solids. Milk chocolate typically comprises at least 3.5 wt% milk fat. In another preferred embodiment, the chocolate composition comprises at least 16 wt % of dry non-fat cocoa solids.

Particularly good results have been achieved with a dark chocolate and a milk chocolate.

The chocolate or chocolate compound according to the invention typically comprises crystalline fat domains containing a milk fat stearin fraction as a major component of the domains and cocoa butter or cocoa butter equivalent as a minor component, and which domains are embedded in a matrix of chocolate or chocolate compound and which matrix is free of milk fat or contains milk fat as a minor component relative to the content of cocoa butter or cocoa butter equivalent in the matrix. These can be visualized, e.g., using X-ray diffraction.

The total fat content of the chocolate or chocolate compound is preferably in the range of 26-40 wt. %, more preferably in the range of 30-38 wt. %, in particular in the range of 32-36 wt. %, based on total weight of the chocolate or chocolate compound.

The chocolate or chocolate compound according to the invention has a main endotherm melt peak position, as determined by DSC at a temperature in the range of 30-38 °C preferably in the range of 33-37 °C. A further endotherm melt peak position, usually the primary peak position, is present at a temperature of 40 °C or more. The further primary peak position is present at a temperature of 50 °C or less, preferably at a temperature in the range of at least 41-45 °C, in particular at a temperature in the range of 41-43 °C. In particular of a chocolate having these characteristics a high resistance to heat induced bloom has been determined.

In particular, a chocolate or chocolate compound according to the invention, such as a chocolate obtainable by a method for preparing a chocolate or chocolate compound according to the invention, can be characterised by an increased resistance to heat induced blooming, compared to a reference chocolate of comparable ingredient composition, that has not been made with the seeding composition according to the invention. A suitable test to check this is in particular any of the heat cycle tests described in the Examples.

In a method for preparing chocolate or chocolate compound a chocolate mixture or chocolate compound mixture is made from chocolate mass or chocolate compound mass and one or more other ingredients other than the seed composition. The mixing may be done in a manner known per se. Generally it comprises blending the molten chocolate mass or chocolate compound mass with said one or more ingredients, such as cocoa butter or other fat (other than the seed composition), sweetening matter, lecithin, flavour. The term chocolate mass is generally known in the art as the pure cocoa mass, produced from cocoa beans. In molten form it is also called chocolate liquor. Chocolate compound mass is the analogous raw material used for preparing chocolate compound.

If desired, the resultant mixture (still without the seed composition) is thereafter refined. Refining reduces the size of solid particles in the mixture, such as cocoa solids, milk solids solids and sugar crystals. Refining the chocolate can be done with a grinder.

If desired, the mixture is subjected to conching. Conching is the process of distributing the fat phase evenly within the chocolate. It is an important process to promote flavour development. Conching may last up to 78 hours for high quality chocolate with a mild, rich taste. Also, chocolate may be conched for as little as 6 hours.

Conching is important to the final texture and flavor of chocolate. During conching the chocolate mixture is mixed, agitated and aerated.

The chocolate mixture is subjected to tempering, which takes place after refining and conching (if these processes are carried out). Tempering is the process of controlled crystallization of the fat phase. Cocoa butter can crystallize into six different polymorphic forms. The primary purpose of tempering in the preparation of chocolate is to assure that predominantly or, preferably only the preferred polymorph, type V, is formed so that the chocolate is glossy, firm, has a good snap, and melts near body temperature. The other polymorphs of cocoa butter render the chocolate, soft, crumbly and/or too easy to melt.

In a conventional tempering process, generally, the chocolate (compound) mixture is first heated to around 45 °C (113 °F) to melt all six forms of crystals. Next, the chocolate is cooled to about 27 °C (81 °F), which will allow crystal types IV and V to form. At this temperature, the chocolate is agitated to create many small crystal "seeds" which will serve as nuclei to create small crystals in the chocolate. The chocolate is then heated to about 31 °C (88 °F) to eliminate any type IV crystals, leaving just type V. After this point, any excessive heating of the chocolate will destroy the temper and this process will have to be repeated. Thus, for example, tempering can be carried out as follows: Working the molten chocolate on a heat-absorbing surface, such as a stone slab, until thickening indicates the presence of sufficient crystal "seeds"; the chocolate is then gently warmed to working temperature.

It is also possible to stir solid chocolate into molten chocolate to "inoculate" the liquid chocolate with crystals (this method uses the already formed crystals of the solid chocolate to "seed" the molten chocolate).

Chocolate tempering machines (or temperers) with computer controls can be used for producing consistently tempered chocolate, particularly for large volume applications.

In principle, it is possible to use a seed composition according to the present invention to inoculate the chocolate (compound) mixture to initiate the tempering process. Particularly good results have been achieved with a method wherein first the tempering is carried for at least an essential part, more preferably essentially completely, and thereafter the seed composition is added to the mass that has been tempered or is being tempered. This addition, to form a blend of the chocolate (compound) mixture and seed composition occurs at a temperature at which the crystallised fat of both the seed composition and the chocolate (compound) mixture remains at least substantially crystallised.

The seed composition is usually added to the chocolate (compound) mixture in a weight to weight ratio seed composition to chocolate (compound) mixture of at least 0.5:99.5, preferably said ratio is at least in the range of 1:99, more preferably at least 2:98, even more preferably at least 3:97, in particular at least 4:96. Generally, said ratio is less than 30:70, preferably 25:75 or less, more preferably 14:86 or less, even more preferably 10:90 or less, in particular 6:94 or less.

When adding the seed composition to the chocolate mixture or chocolate compound mixture, the chocolate mixture or chocolate compound mixture is typically at a temperature of about 29 to about 31 °C, preferably at about the tempering temperature. The temperature of the seed composition - when added to the chocolate (compound) mixture is usually in the range of 32-42 °C, preferably in the range of 33-40 °C, more preferably in the range of 35-39 °C with the proviso that at least part of the seed composition, typically 10-50 wt% of the blend, preferably 15-45 wt% and more preferably 20-40 wt% of the blend is in a crystalline phase (as determined by NMR when in equilibrium state) when added. As described above, this percentage can be determined using proton NMR spectroscopy. It has been found particularly advantageous to add the seed composition as a paste or thick viscous fluid of crystalline fat particles in a continuous pasty or fluid fat phase. This has been found to be advantageous with respect to a high resistance to heat induced bloom and/or facilitates favourable distribution of the seed composition particles into the chocolate (compound) mixture. Such paste or thick viscous fluid can be obtained by heating the chocolate seed solids (e.g. flakes) prepared separately to a temperature in the range as mentioned above. Alternatively, the chocolate seed composition is prepared simultaneously with the chocolate composition in a separate production line and is kept in liquid or slurry form after crystallization, thus forming a pre-crystallized slurry. The benefit of using such pre-crystallized slurry in comparison to the flake slurry is twofold. The flake slurry requires flakes to be prepared beforehand requiring separate logistics and measures (packaging, transportation, unloading, heating) that could be less efficient from a process economics point of view. Furthermore, the melting of the seed flakes is a critical step because, if not done properly, may lead to visible crystals in the chocolate which are perceived as yellow dots in the chocolate.

The pre-crystallized slurry can, for example, be made by a scraped surface heat exchanger (SSHE) unit close to the chocolate line with constant quality of the slurry and recirculation of a stream if the chocolate line stops, thus leading to less rework. However, other ways to make and supply the pre-crystallized slurry could also be used as will be apparent to the person skilled in the art of chocolate making.

After tempering and adding the seed composition, the resultant blend is cooled and allowed to solidify whereby the chocolate or the chocolate compound is obtained.

A skilled person will be able to adjust the mixing, refining, conching, tempering and further solidification parameters according to the chocolate (compound) composition and its intended use based on common general knowledge, the literature cited herein, and the further information provided herein.

The invention will now be illustrated by the following examples.

### Examples

### Example 1: preparation of a seed composition

A stearin fraction from milk fat fraction having a primary endotherm melt peak position (also the main peak position) at about 47 °C and cocoa butter were weighed in to the desired ratio (e.g. 70:30) and heated to 60°C and mixed by means of an overhead stirrer and kept at this temperature for 5 minutes. The resultant mixture was subsequently poured on a stainless steel surface at a temperature of 15 °C and allowed to solidify on the surface. After solidifying it was scraped off and the flakes obtained were stored at ambient conditions until further use.

The seed flakes were found to have a SFA-UFA-SFA content of approximately 33 wt% based on total weight of seed composition.

### Example 2: preparation of dark chocolate

A dark chocolate base with following recipe was produced: sugar 45.2%, cocoa mass 39.7%, cocoa butter 11.4%, cocoa powder 3.0%, soy lecithin 0.7%, vanilla 0.01%.

Reference sample 1A was produced by adding 4.5% cocoa butter to the base and tempering this mixture.

Reference sample 1B was produced by adding 4.5% milk fat to the base and tempering this mixture.

Reference sample 1C was produced by adding 3% seed composition (70% milk stearin and 30% cocoa butter, made based on the method of Example 1) to the chocolate base, heating the mixture to 40°C (at which temperature the seed composition melted), followed by tempering this mixture. After tempering, 1.5% seeds (100% milk stearin) were added, whereby the total of additionally added fat to the chocolate base added up to 4.5 % (Cf. sample 1D below). To be able to add the 1.5% seeds, the seeds were heated up to 38.5°C to obtain a slurry, which could be mixed in the tempered chocolate.

Sample 1D, according to the invention, was produced by tempering the base chocolate, followed by adding 4.5% 70/30 seeds. Hereto the flakes were heated up to 38.6°C to obtain a slurry which could be mixed in the tempered chocolate.

In all cases, tempering was such that a temper index between 4 and 6 was obtained, this at a plateau temperature value of between 25.7 and 26.9°C. Tempered (and seeded) chocolate samples were then moulded into 13.5g chocolate bars.

In a same cycling test, the chocolate samples are subjected all together to 5 temperature cycles where one cycle was 12 hours at 36°C and 12 hours at 20°C. After cycling blooming was evaluated on the chocolate surface (20°C).

As a result of the cycling tests, all chocolates, except sample 1D, develop significant bloom, with their full surface turning greyish-white. In contrast, the surface of sample 1D was still shiny, without any noticeable change of surface colour.

### Example 3: preparation of dark and milk chocolate

A dark chocolate with following recipe was produced: sugar 49%, cocoa mass 48.2%, cocoa butter 2%, soy lecithin 0.7%, vanilla 0.01%.

Also a milk chocolate was produced, with following recipe: sugar 43.7%, cocoa mass 11.5%, cocoa butter 20.9%, full cream milk powder 23.3%, soy lecithin 0.6%, vanilla 0.01%.

The flakes of various ratios of milk stearin fraction / cocoa butter (80/20, 70/30 and 60/40) are heated to 1.5 °C below their respective melting temperature, as obtained from the DSC profiles. Hereby, the sample transforms from solid flakes to a slurry. SFA-UFA-SFA contents of the flakes were found to be approximately 26 wt% (80/20), 33 wt% (70/30) and 40 wt% (60/40).

The seed slurry was mixed into chocolate (at 4.5 wt. % seed slurry) that had previously been tempered by hand. The tempered and seeded chocolate was then moulded into 13.5g chocolate bars.

In a test, the chocolate samples were subjected to 3 temperature cycles where one cycle is 12 hours at 36°C and 12 hours at 20°C. After cycling blooming was evaluated on the chocolate surface.

In another test, the chocolate samples were subjected to 3 cycles where one cycle was 12 hours at 36°C and 12 hours at 25°C. After cycling blooming was evaluated on the chocolate surface.

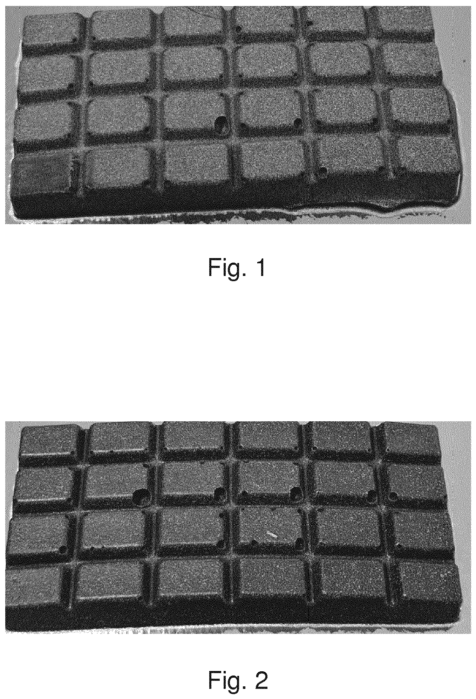

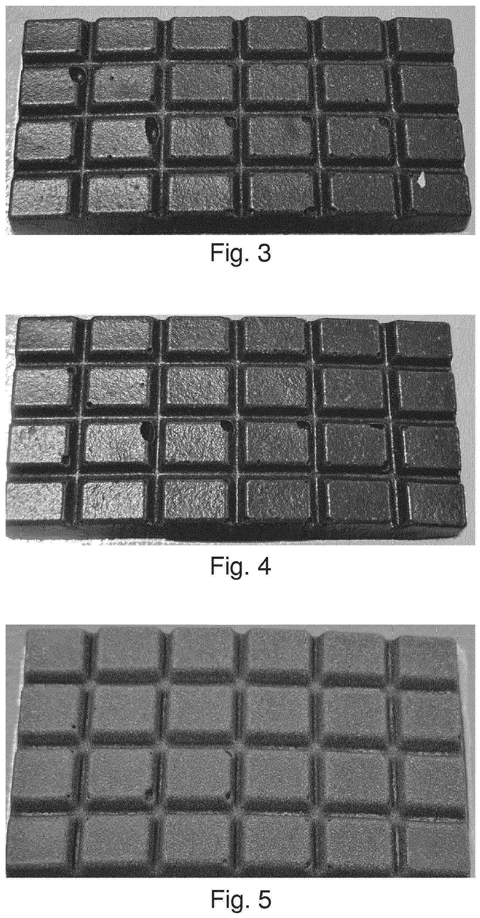

Following either of above mentioned cycling tests, the reference sample had bloomed, i.e. a white layer was seen on the surface of the chocolate in all of the cases. Figure 1 shows the reference dark chocolate after three cycles between 36 and 25 °C; Figure 5 shows the reference milk chocolate after three cycles between 36 and 25 °C).

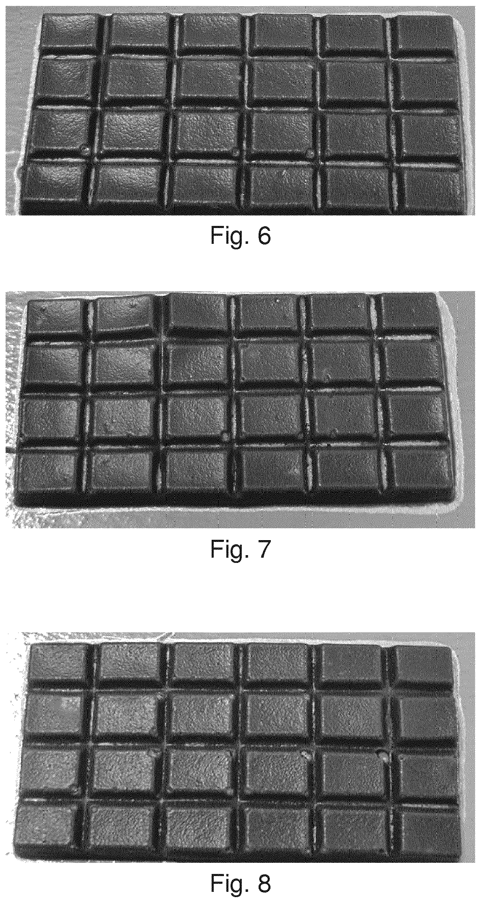

For the seeded chocolates the surface was uniform in colour. There was no bloom on the surface of the samples for dark or milk chocolates seeded with a seed composition according to the invention. For the dark chocolate, Figure 2 shows the dark chocolate with the 60/40 seed composition, Figure 3 the dark chocolate with the 70/30 seed composition and Figure 4 the dark chocolate with the 80/20 composition. Figure 6 shows the milk chocolate with the 60/40 seed composition, Figure 7 the milk chocolate with the 70/30 seed composition and

Figure 8 the milk chocolate with the 80/20 composition.

### Example 4: preparation of chocolate

A chocolate base with following recipe was made: sucrose 54.4%, cocoa mass 34.8%, cocoa butter 10.1%, lecithin 0.7%.

Flakes consisting of 70% milk stearin and 30% cocoa butter were heated to 1.5 °C below the melting temperature, as obtained from the DSC profiles. Hereby the sample transformed from solid flakes to a slurry.

The melted seed slurry of 70/30 seeds was mixed into the chocolate base (at 4.5%) that had previously been tempered by hand. The tempered and seeded chocolate was then moulded into 13.5g chocolate bars.

As a reference, compared to the addition of 4.5% seed composition, the same amount of milk fat and cocoa butter (as present in the seeds) was added to the recipe prior to preparing the tempered chocolate.

In a first test, 3 cycles are done where one cycle is 12 hours at 36°C and 12 hours at 20°C. After cycling blooming was evaluated on the chocolate surface.

In another test, 3 cycles are done where one cycle is 12 hours at 36°C and 12 hours at 25°C. After cycling blooming was evaluated on the chocolate surface.

As a result, the reference sample had bloomed, i.e. a white layer was seen on the surface of the chocolate after both cycling 20-36°C and 25-36°C.

For the seeded chocolates the surface was uniform in colour. There was no bloom on the surface of the seeded chocolates.

### Example 5: preparation of chocolate

A chocolate base with following recipe was made: sucrose 54.4%, cocoa mass 34.8%, cocoa butter 10.1%, lecithin 0.7%.

Compositions of 70% milk stearin and 30% cocoa butter were prepared by heating this to 60°C and mixing. At this temperature this mix is liquid. Two pre-crystallized seed slurry samples were prepared by cooling these under continuous stirring to 25°C and 20°C, respectively, until the samples turned opaque. Simultaneously the chocolate was tempered. 4.5% of the pre-crystallized seed slurry samples were added to the tempered chocolate. The resulting tempered and seeded chocolate compositions were then moulded into 13.5g chocolate bars.

The same treatment was carried out for compositions of 80% milk stearin and 20% cocoa butter by stirring those at 35°C and at 30°C until the samples turned opaque. The resulting tempered and seeded chocolate compositions were then moulded into 13.5g chocolate bars.

As a reference, the same compositions were made by adding a slurry prepared from a pre-crystallized seed flakes prepared from 70% milk stearin and 30% cocoa butter and 80% milk stearin and 20% cocoa butter as described in Example 2.

The same type of 3 cycle test as described in Example 4 was carried out, where one cycle is 12 hours at 36°C and 12 hours at 20°C. After cycling blooming was evaluated on the chocolate surface.

The result of the test was that none of the seeded chocolate bars, either made by means of the pre-crystallized slurry or by using the seed flakes, showed any bloom on the surface.

## Claims

1. Method for preparing a chocolate seed composition or chocolate compound seed composition having a primary endotherm melt peak position of at least 40 °C, preferably in the range of 41-50 °C, more preferably in the range of 42-48 °C, more preferably in the range of 43-46 °C, as measured by Differential Scanning Calorimetry, comprising subjecting a liquid fat blend comprising
(i) 50-99.5 wt. % of a stearin fraction of milk fat having a primary endotherm melt peak position of at least 42.5 °C, as measured by Differential Scanning Calorimetry, and
(ii) 50-0.5 wt.% cocoa butter or cocoa butter equivalent,
to a crystallization step, which comprises cooling the liquid fat blend to a temperature below the lower end of the solidification range of the blend.

2. Method according to claim 1, wherein the primary endotherm melt peak position of said stearin fraction is at a temperature in the range of 42.5-49 °C, preferably in the range of 43.0-48.5 °C, more preferably in the range of 43.5-48.0 °C, in particular in the range of 44.0-48.0 °C.

3. Method according to claim 1 or 2, wherein said stearin fraction has an SFC20 of at least 55%, an SFC25 of at least 50%, an SFC30 of at least 44%, an SFC35 of at least 30%, and/or an SFC40 of at least 15%.

4. Method according to claim 1, 2 or 3, wherein the blend comprises 60-95 wt.% of said stearin fraction and 40-5 wt.% cocoa butter or cocoa butter equivalent, preferably 65-85 wt.% of said stearin fraction and 35-15 wt.% cocoa butter or cocoa butter equivalent, more preferably 65-75 wt.% of said stearin fraction and 35-25 wt.% cocoa butter or cocoa butter equivalent.

5. Method according to any of the preceding claims, wherein the liquid fat blend is brought to a temperature of at least 10 °C above the upper end of the melting range of the blend, preferably a temperature in the range of 50-65 °C, before being cooled to a temperature in the range of 5-35 °C, preferably 7-30 °C, more preferably 10-25 °C at which lower temperature crystallization of the fat phase takes place.

6. A chocolate seed composition or chocolate compound seed composition obtained by the method of any one of claims 1 to 5 comprising a crystalline fat phase which fat phase is a blend of (i) a stearin fraction of milk fat and (ii) cocoa butter or cocoa butter equivalent in a weight to weight ratio of said stearin fraction to cocoa butter (equivalent) in the range of 50:50 to 99:1, preferably in the range of 60:40 to 95:5, more preferably in the range of 65:35 to 75:25, said chocolate seed composition having a primary endotherm melt peak position of at least 40 °C, when measured by Differential Scanning Calorimetry and having a content of triglycerides having two saturated fatty acid residues at the sn-1 and sn-3 position and one unsaturated fatty acid residue at the sn-2 position of less than 40 wt.% of the seed composition.

7. A chocolate seed composition according to claim 6 having a primary endotherm melt peak position, as determined by DSC at a temperature in the range of 42-48 °C, preferably in the range of 43-46 °C.

8. A method for preparing chocolate or chocolate compound, comprising preparing a chocolate mixture or chocolate compound mixture from chocolate mass or chocolate compound mass and tempering the mixture, wherein during or after tempering a seed composition is blended into the chocolate mixture or chocolate compound mixture, after which the resultant blend is cooled and allowed to solidify whereby the chocolate or the chocolate compound is obtained, wherein the seed composition is according to claim 6 or 7.

9. Method according to claim 8, wherein the chocolate mixture or chocolate compound mixture to which the seed composition is added is at about tempering temperature, typically a temperature of 29 to 31 °C, and the temperature of the seed composition that is added is at a temperature in the range of 35-40 °C, with the proviso that at least part of the seed composition, typically at least 20 % by weight, is in a crystalline phase when added.

10. Method according to claim 8 or 9, wherein said seed composition is added to said mixture in a weight to weight ratio in the range of 1:99 to 25:75, preferably in the range of 2:98 to 14:86, more preferably in the range of 3:97 to 6:94.

11. Chocolate or chocolate compound obtainable by a method according to any of the claims 8-10, which chocolate or chocolate compound has a main endotherm melt peak position, as determined by DSC at a temperature in the range of 30-38 °C, preferably in the range of 33-37 °C, and a further primary endotherm melt peak position at 40 °C or above, preferably at a temperature in the range of 41-45 °C, in particular at a temperature in the range of 41-43 °C.

12. Use of a seed composition according to claim 6 or 7 in the preparation of chocolate or chocolate compound for improving thermal tolerance of such chocolate or chocolate compound, in particular by reducing heat induced fat bloom on such chocolate or chocolate compound or for reducing structural defects induced by temperature fluctuation on or in such chocolate or chocolate compound.

## Patentansprüche

1. Verfahren zur Herstellung einer Schokoladenkeimzusammensetzung oder Schokoladenmasse-Keimzusammensetzung mit einer Position des primären endothermen Schmelzmaximums bei wenigstens 40 °C, vorzugsweise in dem Bereich von 41-50 °C, bevorzugter in dem Bereich von 42-48 °C, bevorzugter in dem Bereich von 43-46 °C, wie gemessen durch Differentialscanning-Kalorimetrie,
umfassend Unterwerfen eines flüssigen Fettgemischs umfassend
(i) 50-99,5 Gew.-% an einer Stearinfraktion von Milchfett mit einer Position des primären endothermen Schmelzmaximums bei wenigstens 42,5 °C, wie gemessen durch Differentialscanning-Kalorimetrie, und
(ii) 50-0,5 Gew.-% Kakaobutter oder Kakaobutteräquivalent,
an einen Kristallisationsschritt, der Kühlen des flüssigen Fettgemischs auf eine Temperatur unter dem unteren Ende des Erstarrungsbereichs des Gemischs umfasst.

2. Verfahren gemäß Anspruch 1, wobei die Position des primären endothermen Schmelzmaximums der Stearinfraktion bei einer Temperatur in dem Bereich von 42,5-49 °C liegt, vorzugsweise in dem Bereich von 43,0-48,5 °C, bevorzugter in dem Bereich von 43,5-48,0 °C, insbesondere in dem Bereich von 44,0-48,0 °C.

3. Verfahren gemäß Anspruch 1 oder 2, wobei die Stearinfraktion einen SFC20 von wenigstens 55 %, einen SFC25 von wenigstens 50 %, einen SFC30 von wenigstens 44 %, einen SFC35 von wenigstens 30 % und/oder einen SFC40 von wenigstens 15 % aufweist.

4. Verfahren gemäß Anspruch 1, 2 oder 3, wobei das Gemisch 60-95 Gew.-% an der Stearinfraktion und 40-5 Gew.-% Kakaobutter oder Kakaobutteräquivalent umfasst, vorzugsweise 65-85 Gew.-% an der Stearinfraktion und 35-15 Gew.-% Kakaobutter oder Kakaobutteräquivalent, bevorzugter 65-75 Gew.-% an der Stearinfraktion und 35-25 Gew.-% Kakaobutter oder Kakaobutteräquivalent.

5. Verfahren gemäß einem der vorstehenden Ansprüche, wobei das flüssige Fettgemisch auf eine Temperatur von wenigstens 10 °C über dem oberen Ende des Schmelzbereichs des Gemischs gebracht wird, vorzugsweise eine Temperatur in dem Bereich von 50-65 °C, bevor es auf eine Temperatur in dem Bereich von 5-35 °C, vorzugsweise 7-30 °C, bevorzugter 10-25 °C, abgekühlt wird, bei welcher tieferen Temperatur Kristallisation der Fettphase erfolgt.

6. Schokoladenkeimzusammensetzung oder Schokoladenmasse-Keimzusammensetzung, erhalten durch das Verfahren gemäß einem der Ansprüche 1 bis 5, umfassend eine kristalline Fettphase, welche Fettphase ein Gemisch von (i) einer Stearinfraktion von Milchfett und (ii) Kakaobutter oder Kakaobutteräquivalent in einem Gewicht-zu-Gewicht-Verhältnis der Stearinfraktion zu Kakaobutter(äquivalent) in dem Bereich von 50:50 bis 99:1, vorzugsweise in dem Bereich von 60:40 bis 95:5, bevorzugter in dem Bereich von 65:35 bis 75:25, ist, wobei die Schokoladenkeimzusammensetzung eine Position des primären endothermen Schmelzmaximums bei wenigstens 40 °C, wenn gemessen durch Differentialscanning-Kalorimetrie, aufweist und einen Gehalt an Triglyceriden mit zwei gesättigten Fettsäureresten an den Positionen sn-1 und sn-3 und einem ungesättigten Fettsäurerest an der Position sn-2 von weniger als 40 Gew.-% der Keimzusammensetzung aufweist.

7. Schokoladenkeimzusammensetzung gemäß Anspruch 6 mit einer Position des primären endothermen Schmelzmaximums, wie bestimmt durch DSC, bei einer Temperatur in dem Bereich von 42-48 °C, vorzugsweise in dem Bereich von 43-46 °C.

8. Verfahren zur Herstellung von Schokolade oder Schokoladenmasse, umfassend Herstellen eines Schokoladengemischs oder Schokoladenmassegemischs aus Masse von Schokolade oder Masse von Schokoladenmasse und Temperieren des Gemischs, wobei während oder nach dem Temperieren eine Keimzusammensetzung in das Schokoladengemisch oder Schokoladenmassegemisch zugemischt wird, wonach die erhaltene Mischung abgekühlt und erstarren gelassen wird, wodurch die Schokolade oder die Schokoladenmasse erhalten wird, wobei die Keimzusammensetzung gemäß Anspruch 6 oder 7 ist.

9. Verfahren gemäß Anspruch 8, wobei das Schokoladengemisch oder Schokoladenmassegemisch, dem die Keimzusammensetzung zugegeben wird, bei etwa Temperiertemperatur vorliegt, typischerweise einer Temperatur von 29 bis 31 °C, und die Temperatur der Keimzusammensetzung, die zugegeben wird, bei einer Temperatur in dem Bereich von 35-40 °C liegt, mit der Maßgabe, dass sich wenigstens ein Teil der Keimzusammensetzung, typischerweise wenigstens 20 Gew.-%, bei dem Zugeben in einer kristallinen Phase befindet.

10. Verfahren gemäß Anspruch 8 oder 9, wobei die Keimzusammensetzung zu dem Gemisch in einem Gewicht-zu-Gewicht-Verhältnis in dem Bereich von 1:99 bis 25:75, vorzugsweise in dem Bereich von 2:98 bis 14:86, bevorzugter in dem Bereich von 3:97 bis 6:94, zugegeben wird.

11. Schokolade oder Schokoladenmasse, erhalten durch ein Verfahren gemäß einem der Ansprüche 8-10, wobei die Schokolade oder Schokoladenmasse eine Position des endothermen Haupt-Schmelzmaximums, wie bestimmt durch DSC, bei einer Temperatur in dem Bereich von 30-38 °C, vorzugsweise in dem Bereich von 33-37 °C, und eine weitere Position eines primären endothermen Schmelzmaximums bei 40 °C oder darüber, vorzugsweise bei einer Temperatur in dem Bereich von 41-45 °C, insbesondere bei einer Temperatur in dem Bereich von 41-43 °C, aufweist.

12. Verwendung einer Keimzusammensetzung gemäß Anspruch 6 oder 7 bei der Herstellung von Schokolade oder Schokoladenmasse zum Verbessern der Wärmetoleranz der Schokolade oder Schokoladenmasse, insbesondere durch Verringern von wärmeinduziertem Ausblühen von Fett auf der Schokolade oder Schokoladenmasse oder zum Verringern von durch Strukturfluktuation an oder in der Schokolade oder Schokoladenmasse induzierten Strukturdefekten.

## Revendications

1. Procédé pour la préparation d'une composition de graines de chocolat ou d'une composition de graines de composé de chocolat ayant une position du pic de fusion endotherme primaire d'au moins 40 °C, préférablement dans la plage de 41 à 50 °C, plus préférablement dans la plage de 42 à 48 °C, plus préférablement dans la plage de 43 à 46 °C, comme mesurée par calorimétrie différentielle à balayage, comprenant la soumission d'un mélange de graisses liquides comprenant
(i) 50 à 99,5 % en poids d'une fraction de stéarine de graisse de lait ayant une position du pic de fusion endotherme primaire d'au moins 42,5 °C, comme mesurée par calorimétrie différentielle à balayage, et
(ii) 50 à 0,5 % en poids de beurre de cacao ou d'équivalent de beurre de cacao,
à une étape de cristallisation, qui comprend un refroidissement du mélange de graisses liquides jusqu'à une température inférieure à l'extrémité inférieure de la plage de solidification du mélange.

2. Procédé selon la revendication 1, la position du pic de fusion endotherme primaire de ladite fraction de stéarine étant à une température dans la plage de 42,5 à 49 °C, préférablement dans la plage de 43,0 à 48,5 °C, plus préférablement dans la plage de 43,5 à 48,0 °C, en particulier dans la plage de 44,0 à 48,0 °C.

3. Procédé selon la revendication 1 ou 2, ladite fraction de stéarine ayant un SFC20 d'au moins 55 %, un SFC25 d'au moins 50 %, un SFC30 d'au moins 44 %, un SFC35 d'au moins 30 % et/ou un SFC40 d'au moins 15 %.

4. Procédé selon la revendication 1, 2 ou 3, le mélange comprenant 60 à 95 % en poids de ladite fraction de stéarine et 40 à 5 % en poids de beurre de cacao ou d'équivalent de beurre de cacao, préférablement 65 à 85 % en poids de ladite fraction de stéarine et 35 à 15 % en poids de beurre de cacao ou d'équivalent de beurre de cacao, plus préférablement 65 à 75 % en poids de ladite fraction de stéarine et 35 à 25 % en poids de beurre de cacao ou d'équivalent de beurre de cacao.

5. Procédé selon l'une quelconque des revendications précédentes, le mélange de graisses liquides étant amené jusqu'à une température d'au moins 10 °C au-dessus de l'extrémité supérieure de la plage de fusion du mélange, préférablement une température dans la plage de 50 à 65 °C, avant d'être refroidi jusqu'à une température dans la plage de 5 à 35 °C, préférablement de 7 à 30 °C, plus préférablement de 10 à 25 °C, la cristallisation de la phase graisseuse ayant lieu à cette température plus basse.

6. Composition de graines de chocolat ou composition de graines de composé de chocolat obtenue par le procédé selon l'une quelconque des revendications 1 à 5 comprenant une phase graisseuse cristalline, laquelle phase graisseuse est un mélange de (i) une fraction de stéarine de graisse de lait et (ii) beurre de cacao ou équivalent de beurre de cacao en un rapport poids sur poids de ladite fraction de stéarine sur (équivalent de) beurre de cacao dans la plage de 50 : 50 à 99 : 1, préférablement dans la plage de 60 : 40 à 95 : 5, plus préférablement dans la plage de 65 : 35 à 75 : 25, ladite composition de graines de chocolat ayant une position de pic de fusion endotherme primaire d'au moins 40 °C, lorsqu'elle est mesurée par calorimétrie différentielle à balayage, et ayant une teneur en triglycérides ayant deux radicaux d'acides gras saturés au niveau de la position sn-1 et sn-3 et un radical d'acides gras insaturé au niveau de la position sn-2 de moins de 40 % en poids de la composition de graines.

7. Composition de graines de chocolat selon la revendication 6 ayant une position de pic de fusion endotherme primaire, comme déterminée par DSC, à une température dans la plage de 42 à 48 °C, préférablement dans la plage de 43 à 46 °C.

8. Procédé pour la préparation d'un chocolat ou d'un composé de chocolat, comprenant la préparation d'un mélange de chocolat ou d'un mélange de composé de chocolat à partir d'une masse de chocolat ou d'une masse de composé de chocolat et tempérage du mélange, pendant ou après le tempérage une composition de graines étant mélangée dans le mélange de chocolat ou le mélange de composé de chocolat, après quoi le mélange résultant est refroidi et laissé solidifier, moyennant quoi le chocolat ou le composé de chocolat est obtenu, la composition de graines étant selon la revendication 6 ou 7.

9. Procédé selon la revendication 8, le mélange de chocolat ou le mélange de composé de chocolat auquel la composition de graines est ajoutée étant à environ une température de tempérage, typiquement une température de 29 à 31 °C, et la température de la composition de graines qui est ajoutée étant à une température dans la plage de 35 à 40 °C, à la condition qu'au moins une partie de la composition de graines, typiquement au moins 20 % en poids, soit dans une phase cristalline lorsqu'elle est ajoutée.

10. Procédé selon la revendication 8 ou 9, ladite composition de graines étant ajoutée audit mélange en un rapport poids sur poids dans la plage de 1 : 99 à 25 : 75, préférablement dans la plage de 2 : 98 à 14 : 86, plus préférablement dans la plage de 3 : 97 à 6 : 94.

11. Chocolat ou composé de chocolat pouvant être obtenu par un procédé selon l'une quelconque des revendications 8 à 10, lequel chocolat ou composé de chocolat a une position de pic de fusion endotherme principale, comme déterminée par DSC, à une température dans la plage de 30 à 38 °C, préférablement dans la plage de 33 à 37 °C, et une position de pic de fusion endotherme primaire supplémentaire à 40 °C ou plus, préférablement à une température dans la plage de 41 à 45 °C, en particulier à une température dans la plage de 41 à 43 °C.

12. Utilisation d'une composition de graines selon la revendication 6 ou 7 dans la préparation de chocolat ou de composé de chocolat pour l'amélioration de la tolérance thermique d'un tel chocolat ou composé de chocolat, en particulier en réduisant le blanchiment gras induit par la chaleur sur un tel chocolat ou composé de chocolat ou pour la réduction de défauts structuraux induits par une fluctuation de température sur ou dans un tel chocolat ou composé de chocolat.
